# EUROPÄISCHE PATENTSCHRIFT

(11) **EP 3 406 977 B1**
(45) Veröffentlichungstag und Bekanntmachung des Hinweises auf die Patenterteilung: **16.12.2020**
(21) Anmeldenummer: 17173019.5
(22) Anmeldetag: 26.05.2017
(51) Int. Cl.: F24F 3/16

(54) **RAUMLUFTREINIGER**
ROOM AIR PURIFIER
PURIFICATEUR D'AIR INTÉRIEUR

(43) Veröffentlichungstag der Anmeldung: 28.11.2018
(73) Patentinhaber: Brunauer, Thomas Sebastian, 5020 Salzburg (AT)
(72) Erfinder: BRUNAUER, Thomas Sebastian, 5020 Salzburg (AT); ERNST, Peter, 5425 Krispl (AT); AUER, Johannes, 5020 Salzburg (AT)
(74) Vertreter: Karakatsanis, Georgios

(56) Entgegenhaltungen:
- WO-A1-92/20974
- WO-A2-2015/126982
- US-A1- 2003 150 708
- US-A1- 2005 069 465
- US-A1- 2007 253 860
- US-B1- 6 544 485

## Beschreibung

Die vorliegende Erfindung bezieht sich auf einen Raumluftreiniger gemäß dem Oberbegriff des Patentanspruchs 1.

Aus dem Stand der Technik sind Raumluftreiniger bekannt, welche zumindest einen Ozongenerator aufweisen, der in einem Gehäuse mit einer Lufteintritts- und einer Luftaustrittsöffnung angeordnet ist. Hierbei ist ein Lüfter vorgesehen, welcher an der Lufteintrittsöffnung angeordnet ist und Luft in das Innere des Gehäuses ansaugt. Die Luft passiert den Ozongenerator, wobei sich das Ozon mit Geruchsmolekülen der Luft verbindet und Gerüche, Keime, Viren und Bakterien eliminiert. Die im Gerät gereinigte Luft wird anschließend in den Raum rückgeführt.

Ferner sind derartig ausgeführte Raumluftreiniger bekannt, bei denen Ozon durch einen Ozongenerator erzeugt und mittels des an der Lufteintrittsöffnung angeordneten Lüfters aus dem Gerät in den Raum geblasen wird.

Aus der US 2005/069465 A1 ist ein Raumluftreiniger mit einem Ozongenerator bekannt, wobei die Luft durch Luftaustrittsöffnungen im Wesentlichen senkrecht zur Längsachse des Raumluftreinigers ausgestoßen wird Diese Druckschrift offenbart einen Raumluftreiniger nach dem Oberbegriff des Anspruchs 1.

Bei den aus dem Stand der Technik bekannten Geräten, welche Ozon in den Raum einbringen, um Gerüche zu neutralisieren, kommt es an der Luftaustrittsöffnung zu Konzentrationen, die vorgegebene Schwellenwerte für die Ozonkonzentration überschreiten. Aktuell sind 50 ppb in einem Abstand von 50 mm von der Luftaustrittsöffnung zugelassen.

Der vorliegenden Erfindung liegt die Aufgabe zugrunde, einen Raumluftreiniger mit einem Ozongenerator anzugeben, durch dessen Verwendung Ozon in den Raum eingebracht wird, um die Luft im Raum zu reinigen, wobei die vorgegebenen Schwellenwerte für die Ozonkonzentration nicht überschritten werden.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein Raumluftreiniger vorgeschlagen, welcher ein Gehäuse umfasst, in dem entlang einer Längsachse des Gehäuses oder achsparallel dazu ein Ozongenerator, vorzugsweise ein Ozongenerator zur Bildung von Ozon mittels UV-Strahlung angeordnet ist, wobei der Ozongenerator radial betrachtet von einem Luftleitbauteil mit einem vorgegebenen Abstand in einem vorgegebenen Winkelbereich umgeben ist.

Hierbei ist zumindest die dem Ozongenerator zugewandte Seite des Luftleitbauteils für die vom Ozongenerator emittierte Strahlung reflektierend ausgeführt. Ferner ist axial betrachtet an einem Ende des Gehäuses eine Luftumwälzeinheit angeordnet, welche geeignet ist, eine laminare Strömung vom axial betrachtet gegenüberliegenden Ende des Gehäuses, welches eine Lufteintrittsöffnung aufweist, durch das Gehäuse in Richtung auf die Luftumwälzeinheit zu verursachen.

Gemäß der Erfindung ist axial betrachtet in Strömungsrichtung nach der Luftumwälzeinheit eine Luftaustrittsöffnung vorgesehen, über die in das Geräteinnere angesaugte und mit Ozon angereicherte Luft ausgestoßen wird, wobei die Luftaustrittsöffnung derart ausgeführt ist, dass die mit Ozon angereicherte Luft in den Raum gleichmäßig mit allen Winkeln in einem Winkelbereich zwischen 0 und 90° bezogen auf die Längsachse des Gehäuses gleichmäßig konzentriert ausgestoßen wird.

Dadurch, dass zumindest die dem Ozongenerator zugewandte Seite des Luftleitbauteils reflektierend ausgeführt ist, wird gewährleistet, dass eine Entkeimung der Luft auch im Inneren des Gerätes stattfindet. Ferner wird durch die Anordnung der Luftumwälzeinheit an der Luftaustrittsöffnung eine im Wesentlichen laminare Luftströmung erzielt, wodurch gewährleistet wird, dass die Luft gleichmäßig mit Ozon gemischt wird, so dass Hotspots, nämlich durch Verwirbelung der Luft verursachte hohe örtliche Ozonkonzentrationen an der Luftaustrittsöffnung vermieden werden.

Die Stirnseite des zylinderförmig ausgeführten Gehäuses, der die Luftaustrittsöffnung zugeordnet ist, weist einen geringeren Durchmesser als das Gehäuse auf und ist axial betrachtet um ein vorgegebenes Maß nach außen verschoben angeordnet.

Durch die erfindungsgemäße Ausgestaltung der Luftaustrittsöffnung wird die Luft gleichmäßig konzentriert ausgestoßen ohne die vorgegebenen Schwellenwerte hinsichtlich der Ozonkonzentration zu überschreiten. Die Luftaustrittsöffnung ist derart dimensioniert, dass der UV-Generator von außen nicht direkt sichtbar ist und dass ein größtmöglicher Querschnitt zur Verfügung gestellt wird.

Ferner wird durch die erfindungsgemäße Ausgestaltung der Luftaustrittsöffnung vermieden, dass die mit Ozon angereicherte Luft lediglich entlang einer Richtung in den Raum eingebracht wird, was die Ozonkonzentration in nachteiliger Weise erhöhen würde. Durch die Ausgestaltung der Luftaustrittsöffnung wird die Luft vorzugsweise viertelsphärisch ausgestoßen.

Eine unerwünschte Verwirbelung der Luft im Inneren des Gerätes wird zudem durch das Vorsehen eines Luftumlenkbauteils gemäß einer Weiterbildung der Erfindung zusätzlich vermieden. Das Luftumlenkbauteil ist an dem der Luftumwälzeinheit zugewandten Ende des Luftleitbauteils auf dem radial betrachtet offenen Bereich des Luftleitbauteils axial betrachtet über eine vorgegebene Länge angeordnet. Ferner ist das Luftumlenkbauteil in Bezug auf die Längsachse vorzugsweise derart geneigt angeordnet, dass strömende Luft über das Luftleitbauteil der Luftumwälzeinheit zugeführt wird. Der Ozongenerator ist demnach an dessen der Luftumwälzeinheit zugewandten Ende von dem Luftumlenkbauteil und dem Luftleitbauteil radial betrachtet vollständig umgeben.

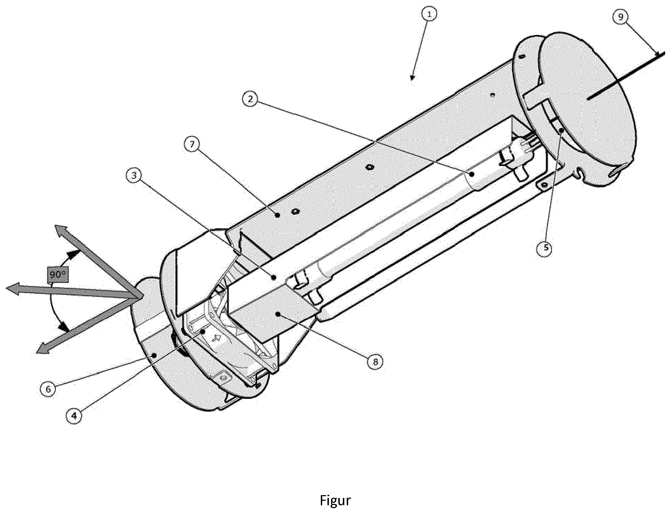

Die Erfindung wird im Folgenden anhand der beigefügten Figur, welche eine schematische perspektivische Darstellung eines erfindungsgemäßen Raumluftreinigers ohne das Gehäuse darstellt, beispielhaft näher erläutert.

In der beigefügten Figur ist mit 1 ein gemäß einer vorteilhaften Ausgestaltung der Erfindung ausgeführter Raumluftreiniger bezeichnet, wobei das in diesem Fall zylinderförmig ausgeführte Gehäuse nicht dargestellt ist.

Der Raumluftreiniger 1 weist einen bei dem gezeigten Beispiel als UV-C Leuchtröhre ausgeführten Ozongenerator 2 auf, welcher entlang einer Längsachse 9 des Gehäuses des Raumluftreinigers angeordnet ist und radial betrachtet von einem Luftleitbauteil 3 mit einem vorgegebenen Abstand, der axial und radial betrachtet variieren kann, in einem vorgegebenen Winkelbereich umgeben ist. Der Ozongenerator 2 kann wie anhand der Figur dargestellt als UV-C Leuchtröhre, als eine Reihenschaltung mehrerer UV-LEDs oder als eine UV-LED ausgeführt sein; ferner ist die Leistung des verwendeten Ozongenerators 2 vorzugsweise einstellbar.

Bei dem gezeigten Beispiel ist das Luftleitbauteil 3 als U-förmiges Profil ausgeführt, dessen Kanten parallel zur Längsachse des Raumluftreinigers 1 verlaufen, wobei das der Luftumwälzeinheit 4 zugewandte Ende des Luftleitbauteils 3 derart ausgeführt ist, dass auf diesem Ende ein Luftumlenkbauteil 8 anordenbar ist. Das Luftleitbauteil 3 und das Luftumlenkbauteil 8 können auch einstückig ausgeführt sein. Im Rahmen weiterer Ausführungsformen kann das Luftleitbauteil 3 eine andere Form aufweisen; beispielsweise kann das Luftleitbauteil 3 als Zylindersegment mit offenen Enden ausgeführt sein.

Wie bereits beschrieben, umfasst der erfindungsgemäße Raumluftreiniger 1 eine Luftumwälzeinheit 4, die bei dem gezeigten Beispiel als Axiallüfter ausgeführt ist und an einem Ende des Gehäuses angeordnet ist, wobei durch diese Anordnung der Luftumwälzeinheit 4 im vorteilhafter Weise eine im Wesentlichen laminare Strömung vom axial betrachtet gegenüberliegenden Ende des Gehäuses, umfassend eine Lufteintrittsöffnung 5 durch das Gehäuse in Richtung auf die Luftumwälzeinheit 4, verursacht wird.

Wie aus der Figur ersichtlich, ist axial betrachtet in Strömungsrichtung nach der Luftumwälzeinheit 4 an der Stirnseite des Gehäuses eine Luftaustrittsöffnung 6 vorgesehen, durch die in das Geräteinnere über die gegenüberliegende Lufteintrittsöffnung 5 angesaugte und mit Ozon angereicherte durchströmende Luft ausgestoßen wird.

Die Luftaustrittsöffnung 6 ist erfindungsgemäß derart ausgeführt, dass die mit Ozon angereicherte Luft in einem Winkelbereich zwischen 0 und 90° bezogen auf die Längsachse 9 gleichmäßig konzentriert ausgestoßen wird, wie anhand der Pfeile veranschaulicht.

Bei dem gezeigten Beispiel wird dies dadurch erreicht, dass die Stirnseite des Gehäuses, der die Luftaustrittsöffnung 6 zugeordnet ist, einen geringeren Durchmesser als das Gehäuse aufweist und axial betrachtet um ein vorgegebenes Maß nach außen verschoben angeordnet ist. Das vorgegebene Maß sowie die Differenz der Durchmesser der Stirnseite des Gehäuses und des Gehäuses sind derart gewählt, dass der Ozongenerator von außen uneinsehbar ist. Ohne die axiale Verschiebung der Stirnseite des Gehäuses würde zwischen der Stirnseite des Gehäuses und der Mantelfläche des zylinderförmigen Gehäuses ein Ringspalt entstehen.

In der beigefügten Figur ist mit 7 eine Platte dargestellt, an der der Ozongenerator 2, das Luftleitbauteil 3, die Luftumwälzeinheit 4 und weitere Komponenten, wie beispielsweise die zum Betrieb des Raumluftreinigers erforderliche Elektronik angebracht sind.

Durch die erfindungsgemäße Konzeption wird ein Raumluftreiniger 1 geschaffen, bei dem die Ozonkonzentration im Raum vor der Luftaustrittsöffnung 6 vorgegebene Schwellenwerte nicht überschreitet.

Im Gegensatz zum Stand der Technik, wonach Ozonluftreiniger im Inneren der Geräte Luft durch eine hohe Ozonkonzentration reinigen und am Ende Frischluft ausstoßen, wird gemäß der Erfindung Ozon in der jeweils erlaubten Konzentration in den Raum eingebracht, so dass die Luft im Raum selbst gereinigt wird. Mittels der Erfindung wird die zur Luftreinigung eines Raums erforderliche Gesamtmenge an Ozon ausgestoßen, ohne jedoch die gemäß der jeweiligen Norm geltenden Werte für die Ozonkonzentration zu überschreiten.

## Patentansprüche

1. Raumluftreiniger (1), umfassend ein Gehäuse, in dem entlang einer Längsachse des Gehäuses oder achsparallel dazu ein Ozongenerator (2) angeordnet ist, wobei der Ozongenerator (2) radial betrachtet von einem Luftleitbauteil (3) mit einem vorgegebenen Abstand in einem vorgegebenen Winkelbereich umgeben ist, wobei zumindest die dem Ozongenerator (2) zugewandte Seite des Luftleitbauteils (3) für die vom Ozongenerator (2) emittierte Strahlung reflektierend ausgeführt ist, wobei axial betrachtet an einem Ende des Gehäuses eine Luftumwälzeinheit (4) angeordnet ist, welche geeignet ist, eine laminare Strömung vom axial betrachtet gegenüberliegenden Ende des Gehäuses, welches eine Lufteintrittsöffnung (5) aufweist, durch das Gehäuse in Richtung auf die Luftumwälzeinheit (4) zu verursachen, wobei axial betrachtet in Strömungsrichtung nach der Luftumwälzeinheit (4) eine Luftaustrittsöffnung (6) vorgesehen ist, über die in das Geräteinnere angesaugte und mit Ozon angereicherte durchströmende Luft ausgestoßen wird, **dadurch gekennzeichnet, dass** die Luftaustrittsöffnung (6) derart ausgeführt ist, dass die mit Ozon angereicherte Luft in den Raum in einem Winkelbereich zwischen 0 und 90° bezogen auf die Längsachse gleichmäßig konzentriert ausgestoßen wird, wobei das Gehäuse zylinderförmig ausgeführt ist und die Luftaustrittsöffnung (6) dadurch realisiert wird, dass die Stirnseite des Gehäuses, der die Luftaustrittsöffnung (6) zugeordnet ist, einen geringeren Durchmesser aufweist als das Gehäuse und axial betrachtet um ein vorgegebenes Maß nach außen verschoben angeordnet ist.

2. Raumluftreiniger (1) nach Anspruch 1, **dadurch gekennzeichnet, dass** an dem der Luftumwälzeinheit (4)zugewandten Ende des Luftleitbauteils (3) auf dem radial betrachtet offenen Bereich des Luftleitbauteils (3) axial betrachtet über eine vorgegebene Länge ein Luftumlenkbauteil (8) angeordnet ist, welches in Bezug auf die Längsachse derart geneigt angeordnet ist, dass strömende Luft über das Luftleitbauteil (4) der Luftumwälzeinheit zugeführt wird.

3. Raumluftreiniger (1) nach Anspruch 2, **dadurch gekennzeichnet, dass** das Luftleitbauteil (3) als U-förmiges Profil ausgeführt ist, dessen Kanten parallel zur Längsachse des Raumluftreinigers (1) verlaufen, wobei das der Luftumwälzeinheit (4) zugewandte Ende des Luftleibauteils (3) derart ausgeführt ist, dass das Luftumlenkbauteil (8) auf dem radial betrachtet offenen Bereich des Luftleitbauteils (3) an diesem Ende angeordnet werden kann.

4. Raumluftreiniger (1) nach Anspruch 2 oder 3, **dadurch gekennzeichnet, dass** das Luftleibauteil (3) und das Luftumlenkbauteil (8) einstückig ausgeführt sind.

5. Raumluftreiniger (1) nach einem der vorangehenden Ansprüche, **dadurch gekennzeichnet, dass** der Ozongenerator (2) als Ozongenerator zur Bildung von Ozon mittels UV-Strahlung ausgeführt ist.

6. Raumluftreiniger (1) nach Anspruch 5, **dadurch gekennzeichnet, dass** der Ozongenerator als UV-C Leuchtröhre ausgeführt ist oder zumindest eine UV-LED aufweist.

7. Raumluftreiniger (1) nach einem der vorangehenden Ansprüche, **dadurch gekennzeichnet, dass** die Luftumwälzeinheit (4) als Axiallüfter ausgeführt ist.

8. Raumluftreiniger (1) nach einem der vorangehenden Ansprüche, **dadurch gekennzeichnet, dass** die Leistung des Ozongenerators (2) einstellbar ist.

## Claims

1. A room air purifier (1), comprising a housing in which an ozone generator (2) is arranged along a longitudinal axis of the housing or axially parallel thereto, wherein the ozone generator (2), viewed radially, is surrounded by an air guiding component (3) at a predetermined distance within a predetermined angular range, wherein at least the side of the air guiding component (3) facing the ozone generator (2) is designed to be reflective for the radiation emitted by the ozone generator (2), wherein, viewed axially, an air circulation unit (4) is arranged at one end of the housing, which is suitable to cause a laminar flow from the axially opposite end of the housing, which has an air inlet opening (5), through the housing towards the air circulation unit (4), wherein after the air circulation unit (4), viewed axially in the direction of flow, an air outlet opening (6) is provided via which ozone-enriched air passing therethrough and sucked into the interior of the device is ejected, **characterized in that** the air outlet opening (6) is designed in such a manner that the ozone-enriched air is ejected into the room in a uniformly concentrated manner within an angular range between 0 and 90° relative to the longitudinal axis, wherein the housing is of cylindrical design and the air outlet opening (6) is implemented **in that** the end face of the housing to which end face the air outlet opening (6) is assigned, has a smaller diameter than the housing and, viewed axially, is arranged displaced outwards by a predetermined dimension.

2. The room air purifier (1) according to claim 1, **characterized in that** at the end of the air guiding component (3) facing the air circulation unit (4), on the radially open region of the air guiding component (3) there is arranged, viewed axially, over a predetermined length, an air deflection component (8) which is arranged inclined with respect to the longitudinal axis in such a manner that flowing air is supplied to the air circulation unit via the air guiding component (4).

3. The room air purifier (1) according to claim 2, **characterized in that** the air guiding component (3) is designed as a U-shaped profile, the edges of which run parallel to the longitudinal axis of the room air purifier (1), wherein the end of the air guiding component (3) facing the air circulation unit (4) is designed in such a manner that the air deflection component (8) can be arranged at this end on the radially open region of the air guiding component (3).

4. The room air purifier (1) according to claim 2 or 3, **characterized in that** the air guiding component (3) and the air deflection component (8) are made in one piece.

5. The room air purifier (1) according to any one of the preceding claims, **characterized in that** the ozone generator (2) is designed as an ozone generator for forming ozone by means of UV radiation.

6. The room air purifier (1) according to claim 5, **characterized in that** the ozone generator is designed as a UV-C fluorescent tube or has at least one UV LED.

7. The room air purifier (1) according to any one of the preceding claims, **characterized in that** the air circulation unit (4) is designed as an axial fan.

8. The room air purifier (1) according to any one of the preceding claims, **characterized in that** the output of the ozone generator (2) is adjustable.

## Revendications

1. Épurateur d'air ambiant (1) comprenant un boîtier, dans lequel, le long d'un axe longitudinal du boîtier ou à la parallèle de l'axe de celui-ci est placé un générateur d'ozone (2), considéré en direction radiale, le générateur d'ozone (2) étant entouré avec un écart prédéfini, dans une plage angulaire prédéfinie par un composant guide d'air (3), au moins le côté du composant guide d'air (3) qui fait face au générateur d'ozone (2) étant réalisé de manière à réfléchir le rayonnement émis par le générateur d'ozone (2), considérée en direction axiale, sur une extrémité du boîtier étant placée une unité de circulation d'air (4), laquelle est apte à engendrer une circulation laminaire à partir de l'extrémité du boîtier qui est opposée, considérée en direction axiale, laquelle comporte un orifice d'entrée d'air (5), à travers le boîtier dans la direction de l'unité de circulation d'air (4), considéré en direction axiale dans la direction de circulation, après l'unité de circulation d'air (4) étant prévu un orifice de sortie d'air (6), à travers lequel est expulsé de l'air aspiré à l'intérieur de l'appareil et enrichi en ozone, **caractérisé en ce que** l'orifice de sortie d'air (6) est exécuté de telle sorte qui l'air enrichi en ozone soit expulsé dans la pièce, en étant concentré dans une plage angulaire comprise entre 0 et 90°, rapportés à l'axe longitudinal, le boîtier étant exécuté en forme de cylindre et l'orifice de sortie d'air (6) étant réalisé **en ce que** la face frontale du boîtier, à laquelle est associé l'orifice de sortie d'air (6) présente un diamètre plus réduit que le boîtier et **en ce que** considérée en direction axiale, est placée en étant décalée d'une dimension prédéfinie vers l'extérieur.

2. Épurateur d'air ambiant (1) selon la revendication 1, **caractérisé en ce que** sur l'extrémité du composant guide d'air (3) qui fait face à l'unité de circulation d'air (4), considérée en direction radiale sur la zone ouverte du composant guide d'air (3), considéré en direction axiale est placé sur une longueur prédéfinie un composant de déviation d'air (8), lequel est placé en étant incliné par rapport à l'axe longitudinal de telle sorte que de l'air circulant soit alimenté par l'intermédiaire du composant guide d'air (4) de l'unité de circulation d'air.

3. Épurateur d'air ambiant (1) selon la revendication 2, **caractérisé en ce que** le composant guide d'air (3) est exécuté sous la forme d'un profilé en forme de U dont les arêtes s'écoulent à la parallèle de l'axe longitudinal de l'épurateur d'air ambiant (1), l'extrémité du composant guide d'air (3) qui fait face à l'unité de circulation d'air (4) étant exécutée de telle sorte que le composant de déviation d'air (8) puisse être placé sur ladite extrémité, sur la zone ouverte, considérée en direction radiale du composant guide d'air (3).

4. Épurateur d'air ambiant (1) selon la revendication 2 ou 3, **caractérisé en ce que** le composant guide d'air (3) et le composant de déviation d'air (8) sont exécutés en monobloc.

5. Épurateur d'air ambiant (1) selon l'une quelconque des revendications précédentes, **caractérisé en ce que** le générateur d'ozone (2) est exécuté sous la forme d'un générateur d'ozone destiné à créer de l'ozone au moyen d'un rayonnement UV.

6. Épurateur d'air ambiant (1) selon la revendication 5, **caractérisé en ce que** le générateur d'ozone est exécuté sous la forme tube fluorescent à UV-C ou comporte pour le moins une LED à UV.

7. Épurateur d'air ambiant (1) selon l'une quelconque des revendications précédentes, **caractérisé en ce que** l'unité de circulation d'air (4) est exécutée sous la forme d'un ventilateur axial.

8. Épurateur d'air ambiant (1) selon l'une quelconque des revendications précédentes, **caractérisé en ce que** la puissance du générateur d'ozone (2) est réglable.
